(19) Europäisches Patentamt
European Patent Office
Office européen des brevets

(11) EP 2 819 332 A1

(12) EUROPEAN PATENT APPLICATION

(43) Date of publication:
31.12.2014 Bulletin 2015/01

(51) Int Cl.:
H04J 3/06 (2006.01)    G01M 3/28 (2006.01)

(21) Application number: 14174017.5

(22) Date of filing: 26.06.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 27.06.2013 KR 20130074907

(71) Applicant: LG CNS Co., Ltd.
Yeongdeungpogu, Seoul (KR)

(72) Inventors:
• Sang Woong, Cho
Seoul (KR)

• Cheolsoon, Park
Seoul (KR)
• Sook-Ryon, Seo
Seoul (KR)
• Jongpil, Ahn
Seoul (KR)

(74) Representative: Delorme, Nicolas et al
Cabinet Germain & Maureau
BP 6153
69466 Lyon Cedex 06 (FR)

(54) **Real time remote leak detection system and method**

(57) A real time remote leak detection system includes leak detection sensor nodes configured to be operated according to a plurality of sensor management modes. The plurality of the leak detection sensor nodes being installed on a underground pipe and at least one network node configured to cause an NTP (Network Time Protocol) node to synchronize timing of the leak detection sensor nodes when a time of the NTP node is set through a timing source such as a Global Positioning System and the leak detection sensor nodes enter a specific sensor management mode. The system may transmit leak sound data collected in real time in a sensor node wirelessly installed in a pipe to a control center to check whether a leak of the pipe occurs and identify leak location as well.

FIG. 1

Description

CROSS-REFERENCE TO RELATED APPLICATIONS

Pursuant to 35 U.S.C. § 119(a), this application claims the benefit of earlier filing date and right of priority to Korean Patent Application No. 10-2013-0074907, filed on June 27, 2013, the contents of which are hereby incorporated by reference herein in their entirety.

BACKGROUND OF THE INVENTION

Field of the Invention

The present invention relates to real time remote leak detection and more particularly to a real time remote leak detection system and method transmitting leak sound data collected in real time in a sensor node wirelessly installed on a pipe to check whether a leak of the pipe occurs and leak location.

Background of the Invention

A water pipe is laid underground and is used for supplying water to buildings and requires suitable maintenance according to decrepit status. Because the water pipe is laid underground, a check of the decrepit status is not easy and water waste is generated by leaking of a decrepit pipe. For solving such this problem, various water leakage detectors have been developed.
Korean Patent Registration No. 10-1107085 discloses a water leak detection unit having GPS receiver modules for providing a synchronizing signal which detects a water leak. The water leak detection unit may wirelessly collect leakage data to cover a large area using a relatively small number of the leak sensors, and may update a threshold whenever water leak detection is performed for determining whether a water leak has occurred. Therefore, a water leak detection unit may minimize an effect according to installation and may prevent a malfunction thereof.
Korean Patent Registration No. 10-1110069 discloses a leakage monitoring system for a pipeline using sensor networks being provided to help efficient management of a pipeline by remotely transmitting information on defects in real time. This system may check whether a defect exists on a pipeline appearance and a defect location of the pipeline to effectively manage the pipeline appearance.

Summary

Embodiments of the present invention include a real time remote leak detection system capable of transmitting leak sound data collected in real time in a sensor node wirelessly installed on a pipe to check whether a leak of the pipe occurs and a leak location.
Embodiments of the present invention also provide a real time remote leak detection system capable of performing time synchronization for a leak detection sensor through a NTP (network Time Protocol) server in a specific sensor management mode.
Embodiments of the present invention also include a real time remote leak detection system capable of performing a conversion between a communication protocol linked with a leak detection sensor and a communication protocol linked with a control center through a network node.
In some embodiments, a real time remote leak detection system includes a plurality of leak detection sensor nodes configured to be operated according to a plurality of the sensor management nodes, the plurality of the leak detection sensor nodes being installed on a underground pipe and at least one network node causing an NTP (Network Time Protocol) node to synchronize timing of the plurality of the leak detection sensor nodes when a time of the NTP node is set through a GPS (Global Positioning System) and the plurality of the leak detection sensor nodes enters a specific sensor management mode and the at least one network node is performed according to a plurality of sensor management modes.
In one embodiment, the real time remote leak detection system may further include a leak detection control node forming an AD-HOC network regardless of whether a link between the at least one network node exists and to perform a communication with a specific network node as a source or a destination.
In one embodiment, the at least one network node may be formed with a first NTP stratum and may receive a time synchronization request from the plurality of the leak detection sensor nodes in the specific sensor management mode.
The plurality of the leak detection sensor nodes may be formed with a second NTP stratum on the first NTP stratum and wherein the first and second NTP stratums do not have a peer relationship with each other.

In one embodiment, the plurality of the leak detection sensor nodes may convert sound pressure for the underground pipe into a digital signal to transmit to the leak detection control node when the time synchronization is completed through a specific network node.

The at least one network node may link the plurality of the leak detection sensor nodes with a first communication protocol, link the leak detection control node with a second communication protocol and may perform a conversion between the first and second communication protocols.

The at least one network node may perform a MULTI-HOP communication between a specific leak detection sensor node and the leak detection control node to determine a next node based on a path reliability or an instant throughput at a current time.

In one embodiment, the at least one network node may directly or indirectly perform a wireless communication through a Multi-Path scheme according to whether a failure exists or according to the instant throughput.

The instant throughput may be calculated by the following Mathematical Equation:

$$T = (f(V)*g(D)) / (M\_hop\_num/A\_hop\_num)$$

wherein f(V) corresponds to a transmission speed of the at least one network node, g(D) corresponds to a distance between the at least one network node, M_hop_num corresponds to a number of a hopping between the at least one network node through the MULTI-HOP and A_hop_num corresponds to a number of the at least one network node linked by the MULTI-HOP.

The leak detection control node may control the plurality of the leak detection sensor nodes through the specific network node to detect a leak of the underground pipe.

In one embodiment, the leak detection control node may calculate a time difference between a first time when the sound pressure of the underground pipe reaches one of the plurality of the leak detection sensor nodes and a second time when the sound pressure of the underground pipe reaches another of the plurality of the leak detection sensor nodes when the leak occurs in the underground pipe, the one and another leak detection sensor nodes being installed in both sides of the underground pipe.

The leak detection control node may estimate a leak location of the underground pipe based on the calculated time difference of the underground pipe.

In some embodiments, a method for a real time remote leak detection being performed on a real time remote leak detection system and the system including a plurality of leak detection sensor nodes, at least one network node and a leak detection control node includes (a) setting a time of a NTP (Network Time Protocol) node through a GPS (Global Positioning System) in the at least one network node, (b) checking whether the plurality of the leak detection sensor nodes enter a specific sensor management mode and (c) causing the NTP node to synchronize a time of the plurality of the leak detection sensor nodes in the at least one network node when the plurality of the leak detection sensor nodes enters the specific sensor management mode.

In one embodiment, the method for the real time remote leak detection may further include (d) controlling the plurality of the leak detection sensor nodes through a specific network node by the leak detection control node to detect a leak of the underground pipe in the plurality of the leak detection sensor nodes.

The method for the real time remote leak detection may further include (e) causing the leak detection control node to receive a digital signal for the sound pressure of the underground pipe from a specific network node to calculate a leak probability value through a plurality of leak probability algorithms.

The method for the real time remote leak detection may further include (f) checking whether the leak probability value exceeds a specific criteria in the leak detection control node to determine whether a leak occurs.

In one embodiment, the method for the real time remote leak detection may further include (g) calculating a time difference when the leak occurs in the underground pipe to estimate a leak location of the underground pipe and wherein the time difference is generated when the sound pressure of the underground pipe reaches the plurality of the leak detection sensor nodes installed in both sides of the underground pipe in the leak detection control node.

Embodiments of the present invention may transmit leak sound data collected in real time in a sensor node wirelessly installed on a pipe to check whether a leak of the pipe occurs and a leak location.

Embodiments of the present invention may perform a time synchronization for a leak detection sensor through a NTP server in a specific sensor management mode.

Embodiments of the present invention may perform a conversion between a communication protocol linked with a leak detection sensor and a communication protocol linked with a control center through a network node.

**BRIEF DESCRIPTION OF THE DRAWINGS**

FIG. 1 is a diagram illustrating a real time remote leak detection system.
FIG. 2 is a block diagram illustrating components of the real time remote leak detection system in FIG. 1.
FIG. 3 is a flowchart illustrating a real time remote leak detection procedure being performed using the real time remote leak detection system in FIG. 1.
FIGs. 4(a) and 4(b) are diagrams illustrating a network node of the real time remote leak detection system in FIG. 1.
FIG. 5 is a diagram illustrating an AD-HOC network for a leak detection control node of the real time remote leak detection system in FIG. 1.

**DETAILED DESCRIPTION**

Explanation of the present invention is merely an embodiment for structural or functional explanation, so the scope of the present invention should not be construed to be limited to the disclosed embodiments. That is, since the embodiments may be implemented in several forms without departing from the characteristics thereof, it should also be understood that the described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

Terms described in the present disclosure may be understood as follows.

While terms such as "first" and "second," etc., may be used to describe various components, such components must not be understood as being limited to the above terms. The above terms are used to distinguish one component from another. For example, a first component may be referred to as a second component without departing from the scope of rights of the present invention, and likewise a second component may be referred to as a first component.

The term "and/or" should be understood as including all combinations that can be made from one or more relevant items. For example, the term "the first item, the second item, and/or the third item" means not only the first, the second, or the third item, but the combination of all of items that can be made from two or more of the first, second, or third items.

It will be understood that when an element is referred to as being "connected to" another element, it can be directly connected to the other element or intervening elements may also be present. In contrast, when an element is referred to as being "directly connected to" another element, no intervening elements are present. In addition, unless explicitly described to the contrary, the word "comprise" and variations such as "comprises" or "comprising," will be understood to imply the inclusion of stated elements but not the exclusion of any other elements. Meanwhile, other expressions describing relationships between components such as "between", "immediately between" or "adjacent to" and "directly adjacent to" may be construed similarly.

Singular forms "a", "an" and "the" in the present disclosure are intended to include the plural forms as well, unless the context clearly indicates otherwise. It will be further understood that terms such as "including" or "having," etc., are intended to indicate the existence of the features, numbers, operations, actions, components, parts, or combinations thereof disclosed in the specification, and are not intended to preclude the possibility that one or more other features, numbers, operations, actions, components, parts, or combinations thereof may exist or may be added.

Identification letters (e.g., a, b, c, etc.) in respective steps or operations are used for the sake of explanation and do not describe any particular order. The respective operations may be changed from a mentioned order unless specifically mentioned in context. Namely, respective steps may be performed in the same order as described, may be substantially simultaneously performed, or may be performed in reverse order.

The present invention may be implemented as machine-readable codes on a machine-readable medium. The machine-readable medium includes any type of recording device for storing machine-readable data. Examples of the machine-readable recording medium include a read-only memory (ROM), a random access memory (RAM), a compact disk-read only memory (CD-ROM), a magnetic tape, a floppy disk, and optical data storage. The medium may also be carrier waves (e.g., Internet transmission). The computer-readable recording medium may be distributed among networked machine systems which store and execute machine-readable codes in a de-centralized manner.

The terms used in the present application are merely used to describe particular embodiments, and are not intended to limit the present invention. Unless otherwise defined, all terms used herein, including technical or scientific terms, have the same meanings as those generally understood by those with ordinary knowledge in the field of art to which the present invention belongs. Such terms as those defined in a generally used dictionary are to be interpreted to have the meanings equal to the contextual meanings in the relevant field of art, and are not to be interpreted to have ideal or excessively formal meanings unless clearly defined in the present application.

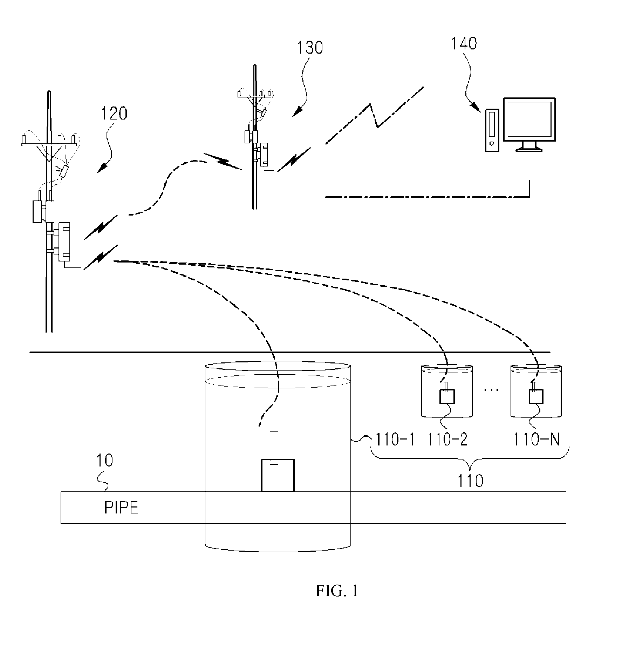

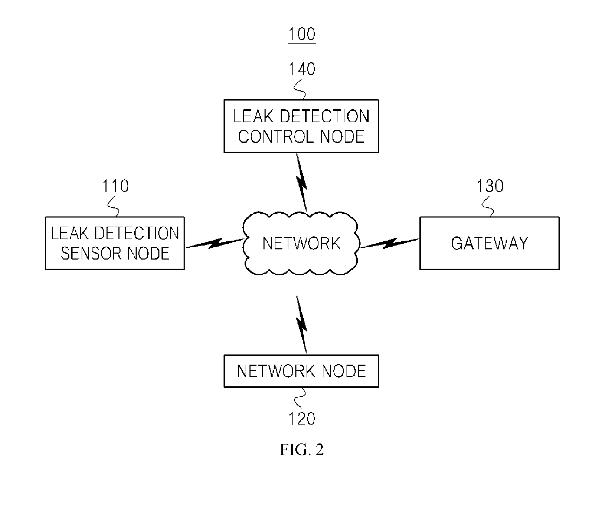

FIG. 1 is a diagram illustrating a real time remote leak detection system and FIG. 2 is a block diagram illustrating components of the real time remote leak detection system in FIG. 1. Referring to these figures, the real time remote leak detection system 100 includes a plurality of leak detection sensor nodes 110, a network node 120, a gateway 130 and a leak detection control node 140.

The plurality of the leak detection sensor nodes 110 are operated according to a plurality of sensor management modes and are installed on a underground pipe 10. Note that various embodiments presented herein are discussed in the context of a pipe located underground. However, such teachings equally apply to other pipe installation configurations (e.g., above ground, concealed, exposed, and combinations thereof, and the like).

In one embodiment, the plurality of the leak detection sensor nodes 110 are installed on the underground pipe 10 and are operated in a sleep mode, a standby mode, and an operation mode. Also, the plurality of the leak detection sensor nodes 110 may manually or automatically measure sound pressure of the pipe 10 according to an input or command from the leak detection control node 140. The plurality of the leak detection sensor nodes 110 may be installed in a cylinder type leak detection sensor case corresponding to, for example, a 66mm diameter and a 125mm through 130mm height to be installed on the pipe 10 at a desired interval (e.g., 50m through 300m intervals) regardless of type or diameter of the pipe.

The plurality of the leak detection sensor nodes 110 may differ a power supplied to a plurality of components according to the particular mode currently implemented (e.g., sleep mode, standby mode, and operation mode) to minimize unnecessary battery power consumption.

In one embodiment, the leak detection sensor nodes 110 may supply power to a RTC (Real Time Clock) in the sleep mode to change the sensor management mode into the standby mode at a specific or desired time. The leak detection sensor nodes 110 may supply power to a Binary CDMA and a CPU for transceiving with the network node 120 in the standby mode to start or boot the Binary CDMA and the CPU. The leak detection sensor nodes 110 may supply the power to an acceleration sensor, an AMP and an A/D board for measuring the sound pressure of the pipe 10 in the operation mode.

When the sleep mode is changed into the standby mode, the leak detection sensor nodes 110 may perform time synchronization through a NTP (Network Time Protocol) node of the network node 120.

In one embodiment, the leak detection sensor nodes 110 may form an NTP stratum exclusive to a specific network node 120. The leak detection sensor nodes 110 may be formed with a second NTP stratum on the first NTP stratum and the first and second NTP stratums may not have a peer relationship with each other.

When the time synchronization is completed through the specific network node 120, the leak detection sensor nodes 110 may convert the sound pressure of the pipe 10 into a digital signal to transmit to the leak detection control node 140. The leak detection sensor nodes 110 may link the specific network node 120 with a first communication protocol to transmit the sound pressure of the pipe 10 to the specific network node 120. A first communication protocol corresponds to the Binary CDMA and the sound pressure corresponds to data converted into the digital signal.

The network node 120 may cause the NTP (Network Time Protocol) node to synchronize timing of the leak detection sensor nodes 110 when a time of the NTP node is set through a GPS (Global Positioning System) and the plurality of the leak detection sensor nodes 110 enter a specific sensor management mode.

In one embodiment, when the leak detection sensor nodes 110 enter the standby mode from the sleep mode to request time synchronization, the network node 120 may cause the leak detection sensor nodes 110 to perform time synchronization. The network node 120 may be formed with a first NTP stratum and receive a time synchronization request from the leak detection sensor nodes 110 formed with a second NTP stratum on the first NTP stratum. A relationship of the network node 120 and the leak detection control nodes 110 may correspond to 1:N.

The network node 120 may link the leak detection sensor nodes 110 with a first communication protocol, link the leak detection control node 140 with a second communication protocol, and perform a conversion between the first and second communication protocols.

In one embodiment, the network node 120 may be linked to the leak detection sensor nodes 110 at a maximum distance (e.g., 500 meters) with the first communication protocol to receive the sound pressure of the pipe 10 measured by the leak detection sensor nodes 110, or to transmit a command received from the leak detection control node 140 to the sensor nodes 110. The first communication protocol may be a RF (Radio Frequency) communication.

In another embodiment, the network node 120 may be linked to the leak detection sensor nodes 110 with a second communication protocol to receive a command measuring the sound pressure of the pipe 10, or to transmit the sound pressure of the pipe 10 measured by the leak detection sensor nodes 110 to the leak detection control node 140. The second communication protocol may be to a mobile wireless communication such as cellular or Wi-Fi.

A specific network node 120 may be one of a gateway 130 communicating with the leak detection control node 140. A relationship between the network node 120 and the gateway 130 may correspond to 1:N.

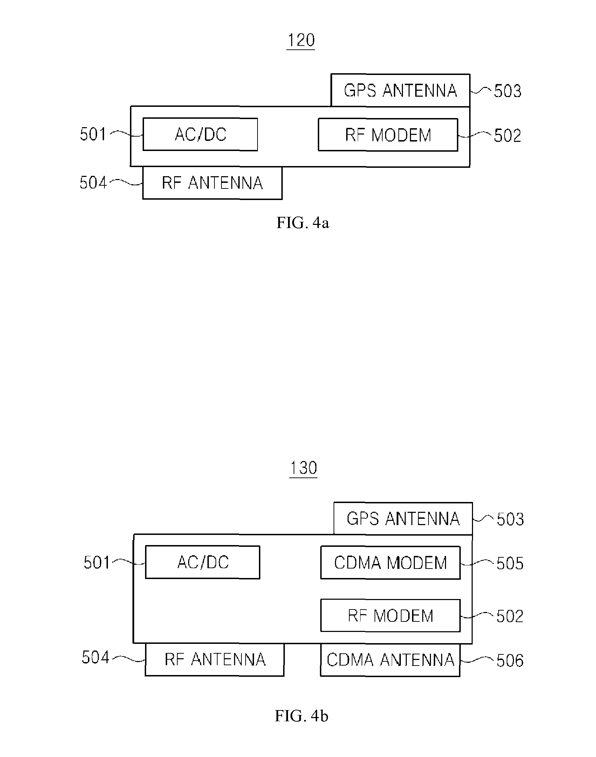

In one embodiment, as shown in FIG. 4(a), the network node 120 may include an

AC/DC 501, a RF modem 502, a GPS antenna 503 and a RF antenna 504. The AC/DC 501 may convert a direct current into an alternating current or may convert the alternating current into the direct current. The RF modem 502 may include a plurality of slave RF modems and a master RF modem, such that the master RF modem collects data wirelessly transmitted by the plurality of slave RF modems. Also, the GPS antenna 503 may receive a GPS satellite signal and the RF antenna 504 may transceive a frequency for the RF modem 502.

In another embodiment, as shown in FIG. 4(b), the gateway 130 may include the AC/DC 501, the RF modem 502, the GPS antenna 503, the RF antenna 504 , a CDMA modem 505 and a CDMA antenna 506. The AC/DC 501, the RF modem 502, the GPS antenna 503 and the RF antenna 504 may be implemented in a manner similar to those components implemented at the network node 120. The CDMA modem 505 may perform 10Mbps bidirectional transmissions. The CDMA modem may collect a certain amount of information to transmit the collected information at one time or may share a frequency for the CDMA modem 502 to transceive a digital signal.

The network node120 may perform a MULTI-HOP communication between a specific leak detection sensor node 110 and the leak detection control node 140 to determine a next node based on path reliability or an instant throughput at a current time. Path reliability may indicate a path capable of constantly transceiving the data without fluctuation for transceiving speed of data (i.e., transceiving the data with a constant speed) and the instant throughput may be determined based on a throughput from a current time to a specific time in the past.

In one embodiment, when the path reliability is unstable, the network node 120 may automatically change a network path. For example, a first network node 120 may receive sound pressure data of the underground pipe 10 from the specific leak detection sensor node 110 and may analyze data transceiving speed of each of second and third network nodes 120 to transmit the sound pressure data to the network node 120 having a best data transceiving speed.

In another embodiment, the network node 120 may check the instant throughput at a current time to automatically change the network path. For example, the first network node 120 may receive the sound pressure of the underground pipe 10 from a specific leak detection sensor node 110 and may check a data throughput for the past 3 days of each of the second and third network nodes 120 to transmit the sound pressure data of the underground pipe 10 to the network node 120 having greater data throughput.

The network node 120 may directly or indirectly perform a wireless communication through a Multi-Path scheme according to whether a failure exists or according to the instant throughput. For example, a reference data transceiving path may correspond to the first, second, third, fourth and sixth network nodes and a first gateway 130, and when a communication failure occurs in the fourth network node 120, the second network node 120 may transmit data to the third and fifth network nodes 120 to change for transmitting the data to the sixth network node 120.

The gateway 130 may be one of the network nodes 120. The gateway 130 may receive the sound pressure data of the underground pipe 10 from a plurality of network nodes 120 to transmit the data to the leak detection control node 140 and may receive the command measuring the sound pressure of the underground pipe 10 from the leak detection control node 140 to transmit the command to the plurality of the network nodes 120.

In one embodiment, a relationship between the gateway 130 and the network node 120 may correspond to 1:N and a relationship between the gateway 130 and the leak detection control node 140 may correspond to N: 1. As one example, the gateway 130 may transceive data with the network node 120 in a maximum distance of 100m.

The leak detection control node 140 may form an AD-HOC network regardless of whether a link between at least one network node 120 exists and may perform a communication with the specific network node 120 as a source or a destination.

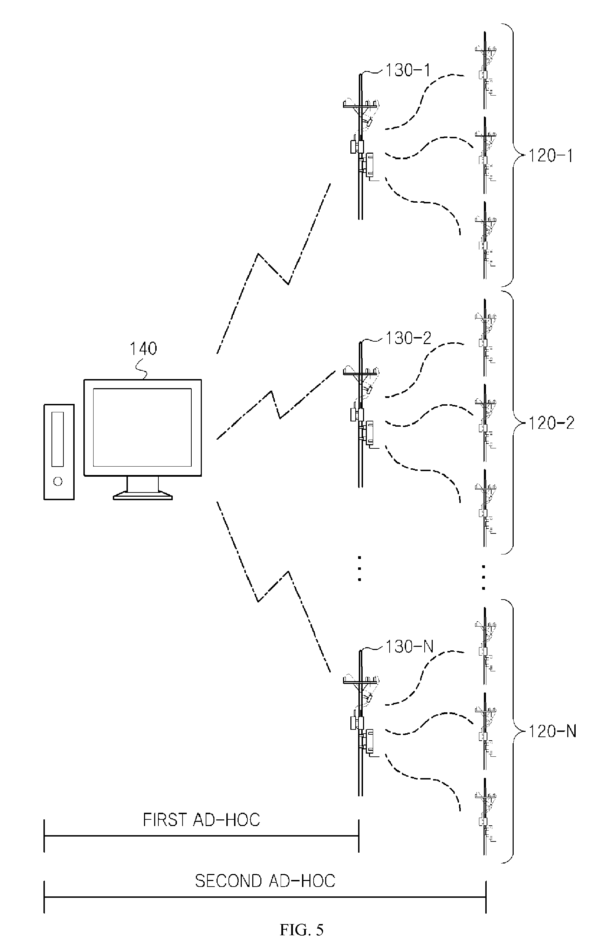

In one embodiment, the leak detection control node 140 may form a plurality of AD-HOC networks (e.g., a plurality of AD-HOC networks may correspond to a first, second and third AD-HOC networks) to perform a communication with the gateway 130 and the network node 120. For example, in FIG. 5, the leak detection control node 140 may form a first AD-HOC network with a plurality of gateways 130-1,130-2,..., 130-N to perform communication and may form a second AD-HOC network with a plurality of network nodes 120-1,120-2,..., 120-N linked with the plurality of the gateways 130-1,130-2,..., 130-N to perform communication. When the first gateway 130-1 receives data from the second gateway 130-2, the first gateway 130-1 may transmit the corresponding data to the leak detection control node 140. That is, the plurality of the gateways 130-1,130-2,..., 130-N may transmit not only data directly received from the plurality of the network nodes 120-1, 120-2, ..., 120-N but also data received from another gateway 130.

The leak detection control node 140 may control the plurality of the leak detection sensor nodes 110 through the specific network node 120 to detect a leak of the pipe 10. The leak detection control node 140 may transmit a command measuring the sound pressure of the pipe 10 to the gateway 130 to receive a result for the command.

The leak detection control node 140 may receive the digital signal for the sound pressure of the underground pipe 10 from the gateway 130 to calculate a leak probability value for the underground pipe 10 through a plurality of leak probability algorithms.

In one embodiment, the leak detection control node 140 may use an RMS (Root Mean Square) calculation to calculate the sound pressure data of the pipe 10 received from the gateway 130 as a RMS value for a time domain and use an FFT (Fast Fourier Transform) to convert the sound pressure data of the underground pipe 10 into spectrum data for a frequency domain and use an LSI (Leak Signal Intensity) calculation to calculate an intensity of a leak signal of the underground pipe 10 based on the sound pressure data of the pipe 10. The leak detection control node 140 may analyze a correlation between the RMS (Root Mean Square) calculation and the LSI (Leak Signal Intensity) calculation to calculate the leak probability value for the pipe 10.

In one embodiment, the leak detection control node 140 may check whether the leak probability value exceeds a certain criteria to determine whether a leak has occurred in the underground pipe 10. For example, when the leak probability value exceeds a certain criteria, the leak detection control node 140 may determine that the leak has occurred in the pipe 10 and when the leak probability value does not exceed this criteria, the leak detection control node 140 may determine that the leak has not occurred in the pipe 10.

In one embodiment, when the leak detection control node 140 determines that a leak has occurred in the pipe 10, the leak detection control node 140 may calculate a time difference between a first time when the sound pressure of the underground pipe 10 reaches one of the plurality of the leak detection sensor nodes 110 and a second time when the sound pressure of the underground pipe 10 reaches another of the plurality of the leak detection sensor nodes 110. One and another leak detection sensor nodes are typically installed on both sides of the pipe 10. For example, the leak detection control node 140 may use a CCP (Cross Correlation) calculation to calculate a cross correlation function between the plurality of the leak detection sensor nodes 110 being installed on both sides of the pipe 10 and calculate the time difference between these two leak detection sensor nodes 110. The leak detection control node 140 may estimate the leak location of the underground 10 based on the calculated time difference.

The leak detection control node 140 may monitor an installation position of the plurality of the leak detection sensor nodes 110, the at least one network node 120 and the gateway 130 through a GIS (Geographic Information System).

The leak detection control node 140 is connected with an external device such as a smartphone and a tablet PC to transmit in real time status information for the plurality of the leak detection sensor nodes 110, the at least one network node 120, and the gateway 130 to the external device such as the smartphone and the tablet PC.

In one embodiment, the leak detection control node 140 may monitor the leak detection sensor nodes 110, the at least one network node 120 and the gateway 130 to check event generating information and a processing status for the leak detection sensor nodes 110, the at least one network node 120 and the gateway 130. The event generating information may correspond to data contents communicated to each of the plurality of the leak detection sensor nodes 110, the at least one network node 120 and the gateway 130 and the data contents may include transmitted or received node information or received data identifying code and a transmitted or received time. Also, the processing status may be at least one of whether the event generating information is processed or a processing time for the event generating information in each of the leak detection sensor nodes 110, the at least one network node 120 and the gateway 130.

The leak detection control node 140 may perform a remote control for the plurality of the leak detection sensor nodes 110 and the at least one network node 120. For instance, in one embodiment, the leak detection control node 140 may remotely perform a firmware upgrade for the leak detection sensor nodes 110 and the at least one network node 120. This upgrade can be done or at any other time.

In another embodiment, the leak detection control node 140 may remotely request a retransmission of data measured by the leak detection sensor nodes 110 in a specific period (e.g., seven days). In other embodiment, the leak detection control node 140 may remotely control ON and OFF of the power for the leak detection sensor nodes 110 and the at least one network node 120. For example, the leak detection control node 140 may perform OFF of the power for a specific leak detection sensor node 110 or a specific network node 120 requiring a repair or a replacement to increase energy efficiency and worker safety.

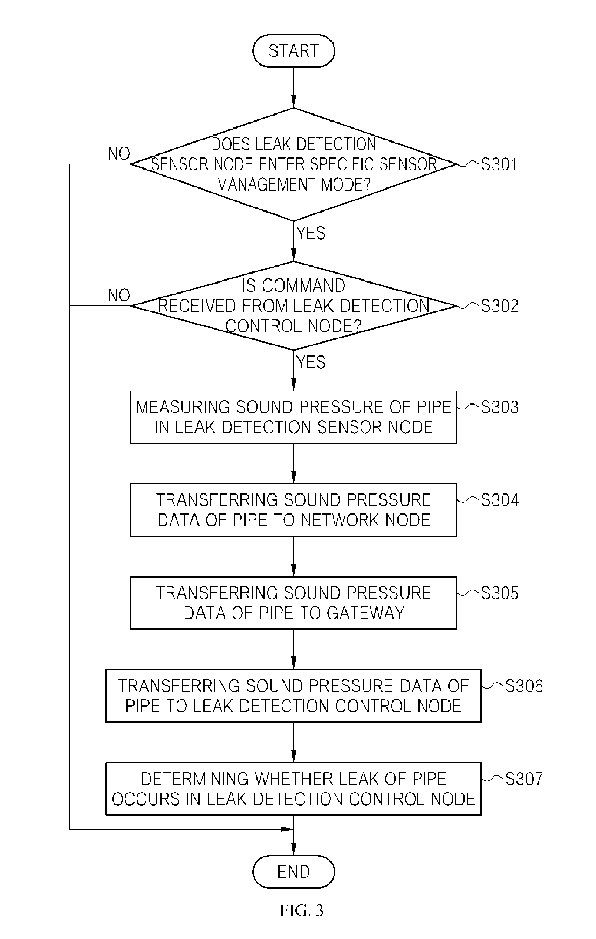

Referring now to FIG. 3, this figure is a flowchart illustrating a real time remote leak detection procedure being performed using the real time remote leak detection system in FIG. 1. In FIG. 3, when the leak detection sensor nodes 110 enter a specific sensor management mode, the real time remote leak detection system 100 may check whether the command measuring the sound pressure of the underground pipe 10 is received from the leak detection control node 140 (blocks S301 and S302).

The leak detection sensor nodes 110 are installed on the pipe 10 and are managed to be in the sleep mode, the standby mode and the operation mode to manually or automatically measure the sound pressure of the pipe 10 according to a command of the leak detection control node (block S303). The leak detection sensor nodes 110 may perform the time synchronization through the NTP (Network Time Protocol) node of the network node 120.

In one embodiment, the plurality of the leak detection sensor nodes 110 may switch from the sleep mode into the standby mode at a specific period time as set by the leak detection control node 140, and may switch from the standby mode to the operation mode when preparation is completed. The leak detection sensor nodes 110 may measure the sound pressure of the underground pipe 10 and transmit the measured sound pressure to the network node 120.

In another embodiment, the leak detection sensor nodes 110 switch from the sleep mode to the standby mode at a specific period time as determined by the leak detection control node 140, and can then check whether the command measuring the sound pressure of the underground pipe 10 occurs from the leak detection control node 140. The leak detection sensor nodes 110 may switch from the standby mode to the operation mode when the command measuring the sound pressure was received to measure the sound pressure of the pipe 10 and may restore the standby mode to the sleep mode otherwise.

The leak detection sensor nodes 110 may convert the sound pressure of the underground pipe 10 into a digital signal to transmit the sound pressure data for the pipe 10 to the specific network node 120 linked with the specific network node 120 through the first communication protocol (block S304). As one example, the first communication protocol may be implemented using a Binary CDMA.

In more detail, the leak detection sensor nodes 110 may sense the sound pressure of the pipe 10 through an acceleration sensor while in the operation mode and may output an electric charge corresponding to a sound pressure level and convert the electric charge into a voltage to amplify the voltage through the AMP. Then, the leak detection sensor nodes 110 may convert an analog signal amplified by the AMP to a digital signal through the A/D board to transmit the digital signal to the network node 120 through an antenna.

The network node 120 may perform the MULTI-HOP communication between the specific leak detection sensor node 110 and the leak detection control node 140 to determine a next node based on the path reliability or the instant throughput at a current time.

In one embodiment, the instant throughput at a current time may be calculated by a following Equation.

$$\text{Equation 1:}$$

$$T = (f(V)*g(D)) / (M\_hop\_num/A\_hop\_num)$$

Where f(V) corresponds to a transmission speed of the at least one network node 120, g(D) corresponds to a distance between the at least one network node 120, M_hop_num corresponds to a number of a hopping between the at least one network node 120 through the MULTI-HOP, and A_hop_num corresponds to a number of the at least one network node 120 linked by the MULTI-HOP.

For example, each of the transmission speed of the at least one network node 120 may be assumed to be about 10. When the distance between the at least one network node 120 is about 100, the number of a hopping between the at least one network node 120 through the MULTI-HOP may be about 5 and the number of the at least one network node 120 linked by the MULTI-HOP may be about 10, then the instant throughput at a current time may correspond to 2000, which is represented in the following Equation.

$$\text{Equation 2:}$$

$$\text{Instant Throughput} = \frac{10 * 100}{\frac{5}{10}}.$$

When the distance between the at least one network node 120 is about 100, the number of a hopping between the at least one network node 120 through the MULTI-HOP may be about 2 and the number of the at least one network node 120 linked by the MULTI-HOP may be about 10, the instant throughput at a current time may correspond to 5000, which is represented in the following Equation.

$$\text{Equation 3:}$$

$$\text{Instant Throughput} = \frac{10 * 100}{\frac{2}{10}}.$$

Therefore, the fewer the number of hops, the greater the instant throughput at a current time.

For another example, when the number of the hopping between the at least one network node 120 through the MULTI-HOP is the same with about 5, assuming that the transmission speed of the at least one network node 120 is about 10, the distance between the at least one network node 120 is about 100 and the number of the at least one network node 120 linked by the MULTI-HOP is about 10, the instant throughput at a current time may correspond to 2000, which is represented by the following Equation.

Equation 4:

$$\text{Instant Throughput} = \dfrac{\frac{10 * 100}{5}}{10}.$$

Consider now the example that the transmission speed of the at least one network node 120 is about 5, the distance between the at least one network node 120 is about 100 and the number of the at least one network node 120 linked by the MULTI-HOP is about 10, the instant throughput at a current time may correspond to 1000, which is represented by the following Equation.

Equation 5:

$$\text{Instant Throughput} = \dfrac{\frac{5 * 100}{5}}{10}.$$

Therefore, the faster the transmission speed is, the greater the instant throughput at a current time.

Referring still to FIG. 3, the network node 120 transmits the sound pressure data of the pipe 10 received from the plurality of the leak detection sensor nodes 110 to the gateway 130 (block S305). The gateway 130 then receives the sound pressure data of the pipe 10 from the leak detection sensor nodes 110 to transmit the sound pressure data to the leak detection control node 140 (block S306).

The leak detection control node 140 receives the digital signal for the sound pressure of the underground pipe 10 from the gateway 130 and calculates the leak probability value for the underground pipe 10 through the plurality of the leak probability algorithms to determine whether the leak occurs in the pipe 10 (block S307). The leak detection control node 140 may form the AD-HOC network regardless of whether a link between the at least one network node exists and may perform a communication with a specific gateway 130 as a source or a destination.

In one embodiment, the leak detection control node 140 may use a RMS (Root Mean Square) calculation to calculate the sound pressure data of the underground pipe 10 received from the gateway 130 as the RMS value for a time domain and use a FFT (Fast Fourier Transform) to convert the sound pressure data of the underground pipe 10 into spectrum data for the frequency domain and may a LSI (Leak Signal Intensity) calculation to calculate the intensity of the leak signal of the underground pipe 10 based on the sound pressure data of the pipe 10. The leak detection control node 140 may analyze the cross correlation between the RMS (Root Mean Square) calculation and the LSI (leak signal Intensity) calculation to calculate the leak probability value for the pipe 10.

When the leak detection control node 140 determine that the leak has occurred in the pipe 10, the leak detection control node 140 may calculate a time difference between a first time when the sound pressure of the underground pipe 10 reaches one of the plurality of the leak detection sensor nodes 110 and a second time when the sound pressure of the pipe 10 reaches another of the plurality of the leak detection sensor nodes 110 and the one and another leak detection sensor nodes 110 is installed in both sides of the underground pipe 10. The leak detection control node 140 may then estimate the leak location of the underground 10 based on the calculated time difference.

Although this document provides descriptions of preferred embodiments of the present invention, it would be understood by those skilled in the art that the present invention can be modified or changed in various ways without departing from the technical principles and scope defined by the appended claims.

Description of symbols

100 : REAL TIME REMOTE LEAK DETECTION SYSTEM

110 : LEAK DETECTION SENSOR NODE

120 : NETWORK NODE

130 : GATEWAY

140 : LEAK DETECTION CONTROL NODE

**Claims**

1. A leak detection system, comprising:

   a plurality of leak detection sensor nodes configured to be operatively coupled to a pipe, wherein each node of the plurality of leak detection sensor nodes is configured to be operated according to any of a plurality of sensor management modes; and
   a network node configured to cause a network time protocol (NTP) node to synchronize timing of the plurality of the leak detection sensor nodes when a time of the NTP node is set via data received from a timing source and the plurality of the leak detection sensor nodes have entered a specific mode of the plurality of sensor management modes.

2. The system of claim 1, wherein the network node includes a first NTP stratum and receives a time synchronization request from the plurality of the leak detection sensor nodes in the specific sensor management mode.

3. The system according to one of claims 1 to 2, wherein the plurality of the leak detection sensor nodes are formed with a second NTP stratum on the first NTP stratum, and wherein the first NTP stratum and the second NTP stratum do not have a peer relationship with each other.

4. The system of claim 3, wherein the plurality of the leak detection sensor nodes form an NTP stratum exclusive to a specific network node, among a plurality of network nodes.

5. The system according to one of claims 1 to 4, further comprising:

   a plurality of network nodes each configured to cause a network time protocol (NTP) node to synchronize timing of the plurality of the leak detection sensor nodes when the time of the NTP node is set via data received from the timing source and the plurality of the leak detection sensor nodes have entered the specific mode of the plurality of sensor management modes; and
   a leak detection control node configured to form an AD-HOC network regardless of whether a link exists between each of the plurality of network nodes and to perform a communication with a specific network node, among the plurality of network nodes.

6. The system of claim 5, wherein the plurality of the leak detection sensor nodes convert a sound pressure for the pipe into a digital signal to transmit to the leak detection control node, when the timing synchronization is completed through a specific network node, among the plurality of network nodes.

7. The system according to one of claims 5 to 6, wherein the plurality of network nodes link the plurality of the leak detection sensor nodes with a first communication protocol, link the leak detection control node with a second communication protocol, and perform a conversion between the first communication protocol and the second communication protocol.

8. The system according to one of claims 5 to 7, wherein the plurality of network nodes perform a MULTI-HOP communication between a specific leak detection sensor node, among the plurality of leak detection sensor nodes, and the leak detection control node to determine a next node based on path reliability or instant throughput at a current time.

9. The system of claim 8, wherein the plurality of network nodes perform a wireless communication through a multi-path scheme according to whether a failure exists or according to the instant throughput.

10. The system of claim 9, wherein the instant throughput is calculated by an equation that follows:

$$T = (f(V)*g(D)) / (M\_hop\_num/A\_hop\_num) \, ,$$

where f(V) is a transmission speed of the network node, g(D) is a distance between each of the plurality of network nodes, M_hop_numis a number of a hopping between the plurality of network nodes through the MULTI-HOP, and A_hop_num corresponds to a number of the plurality of network nodes linked by the MULTI-HOP.

11. The system of claim 10, wherein the leak detection control node controls the plurality of the leak detection sensor nodes through a specific network node, among the plurality of network nodes, to detect a leak of the pipe.

12. The system of claim 11, wherein the leak detection control node calculates a time difference between a first time when sound pressure of the pipe reaches a first node of the plurality of the leak detection sensor nodes and a second time when the sound pressure of the pipe reaches a second node of the plurality of the leak detection sensor nodes.

13. The system of claim 12, wherein the leak detection control node estimates a leak location of the pipe based on the calculated time difference of the pipe.

14. The system according to one of claims 1 to 13, wherein the pipe is located underground.

15. A method for detecting leaks, the method comprising:

setting a time of a network time protocol (NTP) node of a network node using data received from a timing source;
identifying whether a plurality of leak detection sensor nodes have entered a specific mode of a plurality of sensor management modes; and
causing the NTP node to synchronize timing of the plurality of the leak detection sensor nodes when the plurality of the leak detection sensor nodes have entered the specific sensor management mode.

FIG. 1

100

140

LEAK DETECTION
CONTROL NODE

110

LEAK DETECTION
SENSOR NODE

NETWORK

130

GATEWAY

NETWORK NODE

120

FIG. 2

START

NO ◇ DOES LEAK DETECTION
SENSOR NODE ENTER SPECIFIC SENSOR
MANAGEMENT MODE? ◇ S301

YES

NO ◇ IS COMMAND
RECEIVED FROM LEAK DETECTION
CONTROL NODE? ◇ S302

YES

MEASURING SOUND PRESSURE OF PIPE
IN LEAK DETECTION SENSOR NODE — S303

TRANSFERRING SOUND PRESSURE
DATA OF PIPE TO NETWORK NODE — S304

TRANSFERRING SOUND PRESSURE
DATA OF PIPE TO GATEWAY — S305

TRANSFERRING SOUND PRESSURE DATA OF
PIPE TO LEAK DETECTION CONTROL NODE — S306

DETERMINING WHETHER LEAK OF PIPE
OCCURS IN LEAK DETECTION CONTROL NODE — S307

END

FIG. 3

<u>120</u>

```
                                    ┌─────────────────┐
                                    │   GPS ANTENNA   │──503
                                    └─────────────────┘
        ┌───────────────────────────────────────────────┐
501─────│  ┌──────────────┐      ┌──────────────────┐    │
        │  │    AC/DC     │      │    RF MODEM      │────502
        │  └──────────────┘      └──────────────────┘    │
        └───────────────────────────────────────────────┘
504─────│  ┌──────────────────┐
        │  │    RF ANTENNA    │
           └──────────────────┘
```

FIG. 4a

<u>130</u>

```
                                    ┌─────────────────┐
                                    │   GPS ANTENNA   │──503
                                    └─────────────────┘
        ┌───────────────────────────────────────────────┐
501─────│  ┌──────────────┐      ┌──────────────────┐    │
        │  │    AC/DC     │      │   CDMA MODEM     │────505
        │  └──────────────┘      └──────────────────┘    │
        │                        ┌──────────────────┐    │
        │                        │    RF MODEM      │────502
        │                        └──────────────────┘    │
        └───────────────────────────────────────────────┘
504─────│  ┌──────────────────┐  ┌──────────────────┐
        │  │    RF ANTENNA    │  │   CDMA ANTENNA   │──506
           └──────────────────┘  └──────────────────┘
```

FIG. 4b

FIG. 5

Europäisches
Patentamt

European
Patent Office

Office européen
des brevets

**EUROPEAN SEARCH REPORT**

Application Number

EP 14 17 4017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IVAN STOIANOV ET AL: "PIPENET: A Wireless Sensor Network for Pipeline Monitoring", INFORMATION PROCESSING IN SENSOR NETWORKS, 2007. IPSN 2007. 6TH INTERN ATIONAL SYMPOSIUM ON, IEEE, PI, 1 April 2007 (2007-04-01), pages 264-273, XP031158419, ISBN: 978-1-59593-638-7 | 1,3-9, 14,15 | INV. H04J3/06 G01M3/28 ADD. H04L40/12 |
| Y | * page 264, right-hand column, paragraph 2 * <br> * page 265, left-hand column, paragraph 2 * <br> * figures 1,3,5 * <br> * page 266, left-hand column, last paragraph - right-hand column, paragraph 1 * <br> * page 266, right-hand column, paragraph 3 - page 267, left-hand column, paragraph 7 * <br> * page 268, left-hand column, paragraph 1 - paragraph 3 * <br> * page 269 * <br> * page 272, right-hand column, paragraph 4.2.1 * | 2,10-13 | |
| Y | YU-PING CHEN ET AL: "Power consumption measurement and clock synchronization on low-power wireless sensor networks", ADVANCED COMMUNICATION TECHNOLOGY (ICACT), 2012 14TH INTERNATIONAL CONFERENCE ON, IEEE, 19 February 2012 (2012-02-19), pages 406-409, XP032153141, ISBN: 978-1-4673-0150-3 * page 408, right-hand column, paragraph 2 - page 410, right-hand column, paragraph 3; figure 10 * <br> ----- <br> -/-- | 2 | TECHNICAL FIELDS SEARCHED (IPC) <br> H04J G01M F17D H04W H04L |

The present search report has been drawn up for all claims

| Place of search | Date of completion of the search | Examiner |
|---|---|---|
| The Hague | 12 November 2014 | Pieper, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 14 17 4017 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NANDIRAJU N ET AL: "Wireless Mesh Networks: Current Challenges and Future Directions of Web-In-The-Sky", IEEE WIRELESS COMMUNICATIONS, IEEE SERVICE CENTER, PISCATAWAY, NJ, US, vol. 14, no. 4, 1 August 2007 (2007-08-01) , pages 79-89, XP011191782, ISSN: 1536-1284, DOI: 10.1109/MWC.2007.4300987 * page 83, left-hand column, last paragraph - right-hand column, paragraph 1 * | 10-13 | |
| A | RAZVAN BEURAN ET AL: "IEEE 802.15.4 Network Emulation Testbed", ADVANCED INFORMATION NETWORKING AND APPLICATIONS (AINA), 2011 IEEE INTERNATIONAL CONFERENCE ON, IEEE, 22 March 2011 (2011-03-22), pages 451-458, XP031864788, DOI: 10.1109/AINA.2011.25 ISBN: 978-1-61284-313-1 * abstract * * page 455, left-hand column, last paragraph - right-hand column, paragraph 1 * | 1,15 | |

TECHNICAL FIELDS SEARCHED (IPC)

-/--

The present search report has been drawn up for all claims

| Place of search | Date of completion of the search | Examiner |
|---|---|---|
| The Hague | 12 November 2014 | Pieper, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**EUROPEAN SEARCH REPORT**

Application Number

EP 14 17 4017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GOPAL CHAND GAUTAM ET AL: "Time synchronization protocol for wireless sensor networks using clustering", RECENT TRENDS IN INFORMATION TECHNOLOGY (ICRTIT), 2011 INTERNATIONAL CONFERENCE ON, IEEE, 3 June 2011 (2011-06-03), pages 417-422, XP032004537, DOI: 10.1109/ICRTIT.2011.5972293 ISBN: 978-1-4577-0588-5 * abstract; figures 1,3 * * page 419, left-hand column, paragraph 4 - page 420, left-hand column, last paragraph * | 1-5,15 | |
| A | MILLS U DELAWARE J MARTIN D ET AL: "Network Time Protocol Version 4: Protocol and Algorithms Specification; rfc5905.txt", NETWORK TIME PROTOCOL VERSION 4: PROTOCOL AND ALGORITHMS SPECIFICATION; RFC5905.TXT, INTERNET ENGINEERING TASK FORCE, IETF; STANDARD, INTERNET SOCIETY (ISOC) 4, RUE DES FALAISES CH- 1205 GENEVA, SWITZERLAND, 21 June 2010 (2010-06-21), pages 1-110, XP015070844, [retrieved on 2010-06-21] * page 7, paragraph 3 - paragraph 4 * * page 11 * * figures 11,15 * | 1,15 | |

TECHNICAL FIELDS
SEARCHED      (IPC)

The present search report has been drawn up for all claims

| Place of search | Date of completion of the search | Examiner |
|---|---|---|
| The Hague | 12 November 2014 | Pieper, Thomas |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130074907
- KR 101107085
- KR 101110069